# EUROPEAN PATENT APPLICATION

(11) **EP 4 667 184 A1**
(43) Date of publication of application: **24.12.2025**
(21) Application number: 25183005.5
(22) Date of filing: 16.06.2025
(51) Int. Cl.: B29C 45/76, B29C 45/40, B29C 45/64

(54) **INJECTION MOLDING MACHINE AND DETERMINATION METHOD**

(30) Priority: 17.06.2024 JP 2024097264
(71) Applicant: The Japan Steel Works, Ltd., Tokyo 141-0032 (JP)
(72) Inventor: MATSUURA, Kyouhei, Tokyo 141-0032 (JP)
(74) Representative: Simmons & Simmons LLP (Munich)

(57) **Abstract**

A controller (140) is configured to obtain a torque waveform (145) of a servo motor (152) while an ejector pin (22) is operating, compare the torque waveform (145) with a reference waveform (146) obtained in advance, and determine that an ejector (20) is abnormal when a difference between the torque waveform (145) and the reference waveform (146) exceeds a threshold value.

## Description

### CROSS REFERENCE TO RELATED APPLICATIONS

This nonprovisional application is based on Japanese Patent Application No. 2024-097264 filed with the Japan Patent Office on June 17, 2024, the entire contents of which are hereby incorporated by reference.

### BACKGROUND OF THE INVENTION

### Field of the Invention

The present disclosure relates to an injection molding machine and a determination method.

### Description of the Background Art

Japanese Patent Laying-Open No. 2023-77509 discloses an injection molding machine that can achieve reduction in weight of a movable platen. In Japanese Patent Laying-Open No. 2023-77509, the weight of the movable platen can be reduced by providing an ejector in a member other than the movable platen, the ejector being configured to take a molded product out of a mold by ejection.

### SUMMARY OF THE INVENTION

In an injection molding machine, a flaw (which will be referred to as galling below) may occur in a mold due to slide of an ejector pin in adjustment of an amount of movement of a movable platen. If an ejection operation to eject a molded product is kept performed in spite of occurrence of galling in the mold, extra force is applied to the mold by the ejection operation by the ejector pin and the mold may be damaged.

An object of the present disclosure is to provide an injection molding machine capable of preventing damage to a mold and a determination method capable of determination as to abnormality of a mold.

An injection molding machine according to a first aspect of the present disclosure relates to an injection molding machine that makes a molded product with a mold. The injection molding machine includes an ejector that takes the molded product out of the mold by ejecting the molded product and a controller. The ejector includes a first motor, an ejector pin driven by the first motor to eject the molded product, and a first detector that detects torque of the first motor. The controller is configured to obtain a first torque waveform of the first motor while the ejector pin is operating, compare the first torque waveform with a first reference waveform obtained in advance, and determine that the ejector is abnormal when a difference between the first torque waveform and the first reference waveform exceeds a threshold value.

An injection molding machine according to a second aspect of the present disclosure relates to a clamping apparatus that clamps a mold by clamping a movable platen against a fixed platen. The clamping apparatus includes a second motor that drives the movable platen and a second detector that detects torque of the second motor. The controller is configured to obtain a second torque waveform of the second motor during clamping, compare the second torque waveform with a second reference waveform obtained in advance, and determine that the clamping apparatus is abnormal when a difference between the second torque waveform and the second reference waveform exceeds a threshold value.

A method according to a third aspect of the present disclosure relates to a method of making determination as to abnormality of an ejector with a controller, the ejector ejecting a molded product from a mold in an injection molding machine. The ejector includes a first motor, an ejector pin driven by the first motor to eject the molded product, and a first detector that detects torque of the first motor. The determination method includes obtaining a first torque waveform of the first motor while the ejector pin is operating, comparing the first torque waveform with a first reference waveform obtained in advance, and determining that the ejector is abnormal when a difference between the first torque waveform and the first reference waveform exceeds a threshold value.

The foregoing and other objects, features, aspects, and advantages of this invention will become more apparent from the following detailed description of this invention when taken in conjunction with the accompanying drawings.

### BRIEF DESCRIPTION OF THE DRAWINGS

Fig. 1 is a diagram for illustrating a configuration of an injection molding machine according to a first embodiment.
Fig. 2 is a diagram for illustrating a configuration of an ejector according to the first embodiment.
Fig. 3 is a block diagram showing connection relation of a controller according to the first embodiment.
Fig. 4 is a diagram showing relation between an ejector position and ejector torque in the ejector according to the first embodiment.
Fig. 5 is a flowchart showing control contents according to the first embodiment.
Fig. 6 is a diagram showing relation between a platen position and mold opening and closing torque in a clamping apparatus according to a second embodiment.

### DESCRIPTION OF THE PREFERRED EMBODIMENTS

An embodiment of the present disclosure will be described in detail below with reference to the drawings. The same or corresponding elements in the drawings have the same reference characters allotted and description thereof will not be repeated.

### [First Embodiment]

### (Configuration of Injection Molding Machine)

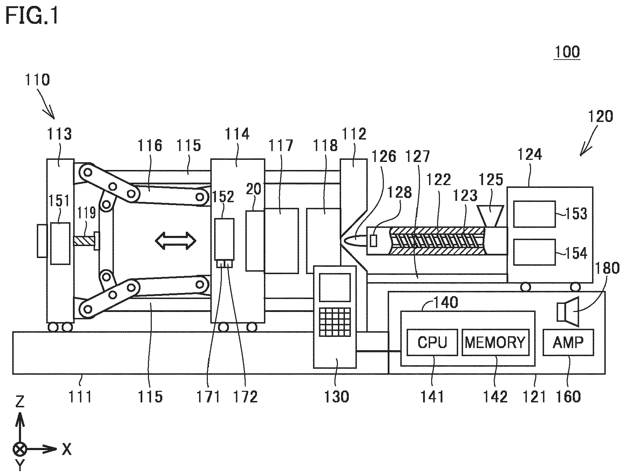

Fig. 1 is a diagram for illustrating a configuration of an injection molding machine 100 according to a first embodiment. For the sake of convenience of description, a floor surface where injection molding machine 100 is arranged is defined as an XY plane and a direction perpendicular to the floor surface is defined as a Z-axis direction. A positive direction along a Z axis may be referred to as an upper surface side or upward and a negative direction may be referred to as a lower surface side or below. Though injection molding machine 100 in the first embodiment is shown as a lateral injection molding machine, it is not limited to the lateral injection molding machine but may be a vertical injection molding machine.

Referring to Fig. 1, injection molding machine 100 includes a clamping apparatus 110 that clamps molds, an injection apparatus 120 that melts and injects an injection material, an operation panel 130, a controller 140, a servo amplifier 160, and a warning apparatus 180. In Fig. 1, clamping apparatus 110 is arranged on a side of a negative direction along an X axis with respect to injection apparatus 120.

Clamping apparatus 110 includes a bed 111, a fixed platen 112, a clamping housing 113, a movable platen 114, a tie bar 115, a clamping mechanism 116, molds 117 and 118, a ball screw 119, and an ejector 20. Bed 111 is arranged on a floor surface, and such equipment as fixed platen 112, clamping housing 113, and movable platen 114 are mounted on an upper surface thereof.

Fixed platen 112 is fixed on bed 111, at an end on a side closer to injection apparatus 120 (that is, a positive direction along the X axis). Clamping housing 113 is arranged on bed 111, at an end in the negative direction along the X axis. Fixed platen 112 and clamping housing 113 are coupled to each other by tie bar 115 including a plurality of bars. Clamping housing 113 is movable in an X-axis direction over bed 111.

Movable platen 114 is arranged on bed 111, between fixed platen 112 and clamping housing 113. Movable platen 114 is configured as being movable in the X-axis direction. Clamping housing 113 and movable platen 114 are coupled to each other by clamping mechanism 116. Clamping mechanism 116 is provided with a toggle mechanism. Ball screw 119 is coupled to the toggle mechanism, and movable platen 114 can be moved relatively to clamping housing 113 in the X-axis direction as a servo motor 151 arranged in clamping housing 113 drives and rotates ball screw 119. A hydraulically driven direct acting type cylinder may be employed as clamping mechanism 116.

Molds 117 and 118 are arranged in movable platen 114 and fixed platen 112, respectively. Mold 117 and mold 118 are arranged as being opposed to each other between movable platen 114 and fixed platen 112. As clamping mechanism 116 is used to move mold 117 in the X-axis direction, mold 117 and mold 118 can be brought in intimate contact with each other or mold 117 can be moved away from mold 118. In the description below, a step of transition from a state in which mold 117 and mold 118 are distant from each other to a state in which they are in intimate contact is referred to as "mold closing". A step of clamping the molds with great force such that the molds are not opened from a mold closed state under a pressure at the time of injection is referred to as "clamping". A step of transition from the state in which mold 117 and mold 118 are in intimate contact to the state in which they are distant from each other is referred to as "mold opening".

A product in a desired shape can be molded by filling the molds with a molten material (resin) and solidifying the molten material by cooling while mold 117 and mold 118 are clamped in a clamping step. After the product is molded, by activating ejection apparatus 20 arranged in movable platen 114 while mold 117 is away from mold 118 in a mold opening step, the molded product can be taken out of mold 117 by being ejected.

In ejector 20, as an ejector pin which will be described later is driven by a servo motor 152 arranged in movable platen 114, it moves. Servo motor 152 is provided with a torque sensor 171 that detects torque thereof and a position sensor 172 (for example, an optical encoder) that detects an angle of rotation of servo motor 152. Detection signals from torque sensor 171 and position sensor 172 are outputted to controller 140.

Controller 140 obtains torque of servo motor 152 from the detection signal from torque sensor 171 and obtains an amount of movement of the ejector pin corresponding to the angle of rotation of servo motor 152 from the detection signal from position sensor 172. A step of taking out a molded product with ejector 20 is referred to as an "ejection" step. Though an example where the ejector pin moves only once in ejection of the molded product in the ejection step is shown, movement of the ejector pin may be repeated a plurality of times.

Injection apparatus 120 includes a base 121, a heating cylinder 122, a drive apparatus 124, a hopper 125, an injection movement apparatus 127, and a temperature sensor 128. Base 121 is arranged on a floor surface of bed 111 on a side of the positive direction along the X axis and drive apparatus 124 is mounted on an upper surface thereof. Servo motors 153 and 154 are arranged in drive apparatus 124.

Heating cylinder 122 that extends in the X-axis direction is arranged in drive apparatus 124. Heating cylinder 122 includes a heater (not shown) for heating the inside, a screw 123, and an injection nozzle 126. Screw 123 is configured as being rotatable with the X-axis direction being defined as a rotation axis, by being driven by servo motor 153 in drive apparatus 124. In addition, screw 123 is configured as being movable in the X-axis direction by servo motor 154. Injection nozzle 126 is arranged at an end of heating cylinder 122 on a side of clamping apparatus 110 (that is, the end in the negative direction along the X axis). Heating cylinder 122 produces a molten material by heating and melting a resin material in a form of beads introduced from hopper 125 and mixing and kneading the resin material with screw 123. A step of thus melting the resin material is referred to as a "plasticization" step.

Injection movement apparatus 127 is implemented, for example, by a mechanism including a hydraulic cylinder or a mechanism including a ball screw, and it couples drive apparatus 124 and fixed platen 112 of clamping apparatus 110 to each other. In an example where injection movement apparatus 127 is implemented by the mechanism including the ball screw, injection movement apparatus 127 is driven by drive apparatus 124 to move drive apparatus 124 and heating cylinder 122 in the X-axis direction. Injection movement apparatus 127 brings injection nozzle 126 into contact with a sprue bush of mold 118 in clamping apparatus 110 and the molten material is injected from injection nozzle 126 to fill a cavity in molds 117 and 118 with the molten material. Servo motor 154 moves screw 123 in heating cylinder 122 in the negative direction along the X axis to apply a pressure to the molten material, to thereby introduce the molten material into molds 117 and 118 and to maintain the pressure of the introduced molten material constant.

The configuration of the injection movement mechanism is not limited to the configuration in which the ball screw arranged between fixed platen 112 and drive apparatus 124 moves the entire injection apparatus as above, and another configuration may be applicable. For example, a configuration in which an apparatus frame and a fixing member in a rear portion of the heating cylinder are coupled to each other by a ball screw and the heating cylinder itself may be moved in a direction toward the mold may be applicable. Alternatively, a configuration in which a slide base on which the injection apparatus is mounted and an apparatus frame are coupled to each other by a ball screw and the injection apparatus is moved together with the slide base to bring the injection nozzle into contact with the mold may be applicable.

A step of introducing a molten material into molds 117 and 118 is referred to as an "injection" step. A step of adjusting an amount of shrinkage by holding the molten material filled in molds 117 and 118 at a constant pressure after the injection step is referred to as a "pressure holding" step. After the pressure holding step is completed, a cooling step of standing by for solidification of a molten molding material in the mold and the plasticization step of melting, mixing and kneading, and weighing a material for next injection are performed in parallel.

Temperature sensor 128 is arranged at several locations (only one of them is shown) over a range from a root side of heating cylinder 122 toward injection nozzle 126. Temperature sensor 128 detects a temperature of heating cylinder 122 and outputs the temperature to controller 140. Controller 140 controls the heater based on a detection value from temperature sensor 128 and adjusts heating cylinder 122 to a desired temperature.

As the cooling step and the plasticization step are completed, the mold opening step and the ejection step are performed so that the molded product is taken out. Injection molding machine 100 is capable of successively form products by cyclically and repeatedly performing the mold closing step, the clamping step, the injection step, the pressure holding step, the cooling and plasticization step, the mold opening step, and the ejection step.

Inside a control panel provided in base 121, controller 140, servo amplifier 160 for driving servo motors 151 to 154, and warning apparatus 180 are accommodated. Controller 140 includes a central processing unit (CPU) 141 and a memory 142. Controller 140 obtains detection values from various sensors arranged in injection molding machine 100 and controls injection molding machine 100 in a centralized manner. Though not shown, servo amplifier 160 includes a plurality of servo amplifiers provided in correspondence with respective servo motors 151 to 154. Warning apparatus 180 is a speaker that outputs warning sound when abnormality occurs in injection molding machine 100.

Operation panel 130 is equipment for an operation of injection molding machine 100 by an operator, and includes a display apparatus such as a liquid crystal display and an input apparatus such as a keyboard. Operation panel 130 is connected to controller 140, and it can obtain and show a state of injection molding machine 100 or output a user operation signal from the input apparatus to controller 140. Operation panel 130 may be a touch panel in which the display apparatus and the input apparatus are integrated. Operation panel 130 may be attached to bed 111 or base 121 of injection molding machine 100 or may be arranged at a position independent of injection molding machine 100. Operation panel 130 may include warning apparatus 180. Warning apparatus 180 may have the display apparatus in operation panel 130 show information on a warning.

### (Configuration of Ejector)

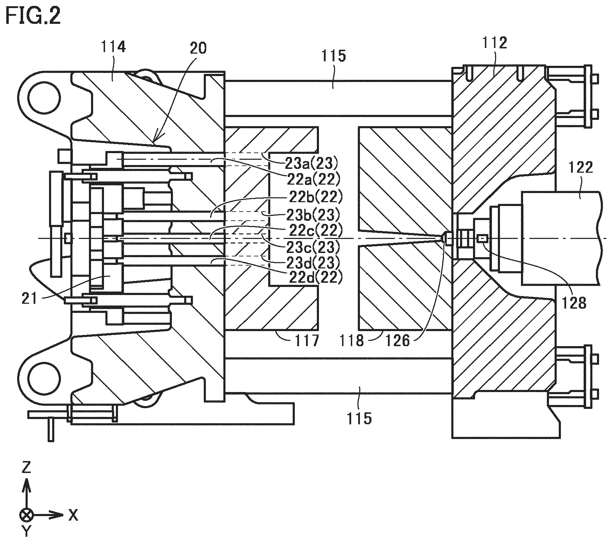

Fig. 2 is a diagram for illustrating a configuration of ejector 20 according to the first embodiment. Ejector 20 is arranged inside movable platen 114. Ejector 20 includes a plate 21 and a plurality of ejector pins 22a, 22b, 22c, and 22d fixed to plate 21. The plurality of ejector pins 22a, 22b, 22c, and 22d are also collectively referred to as an ejector pin 22. As servo motor 152 is driven in response to a control signal outputted from controller 140, ejector pin 22 moves in the positive direction along the X axis in ejector 20. Ejector 20 repeatedly performs a cycle of ejection of a molded product.

Ejector pin 22 moves in the positive direction along the X axis through a plurality of holes 23a, 23b, 23c, and 23d provided in mold 117 so as to eject the molded product from mold 117. The plurality of holes 23a, 23b, 23c, and 23d are also collectively referred to as a hole 23. Though Fig. 2 illustrates an example where four ejector pins 22 are provided, at least one ejector pin 22 should only be provided. Holes 23 not less than ejector pins 22 should only be provided in mold 117.

### (Configuration of Controller)

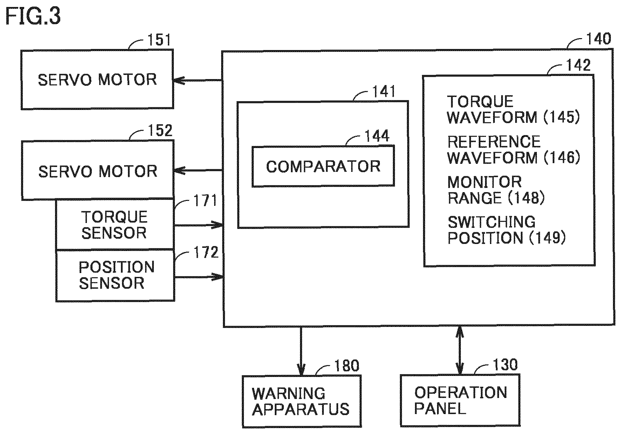

Fig. 3 is a block diagram showing connection relation of controller 140 according to the first embodiment. Controller 140 transmits a control signal for driving clamping apparatus 110 to servo motor 151. Controller 140 transmits a control signal for driving ejector 20 to servo motor 152. The detection signal from torque sensor 171 and the detection signal from position sensor 172 are outputted to controller 140.

CPU 141 includes a comparator 144. Information on a torque waveform 145, a reference waveform 146, a monitor range 148, and a switching position 149 is stored in memory 142. Torque waveform 145 is a waveform in which relation between a position of ejector pin 22 in the ejection step and torque (actual value) outputted from servo motor 152 corresponding to the position of ejector pin 22 is stored. Detection values from torque sensor 171 and position sensor 172 are stored as torque waveform 145 in memory 142 for each ejection step.

Reference waveform 146 is a torque waveform while ejector pin 22 is operating in a cycle preceding the presently performed cycle. The cycle preceding the presently performed cycle refers, for example, to the ejection step performed immediately preceding the presently performed ejection step. In each cycle, the ejection step in which the same molds 117 and 118 are used is performed. Reference waveform 146 may be a torque waveform obtained by averaging among cycles preceding the presently performed cycle. In an example where the average torque waveform is employed as reference waveform 146, an average value of consecutive torque waveforms may be adopted, an average value of discrete values may be adopted, or a moving average taken over immediately preceding several cycles may be adopted. Reference waveform 146 may be a fixed torque waveform set in advance.

Monitor range 148 and switching position 149 are values that can be set by an operator in advance through operation panel 130. Monitor range 148 refers to a range which serves as a threshold value for determination as to abnormality set in correspondence with a position of ejector pin 22. The threshold value for determination as to abnormality is, in other words, a threshold value indicating a normal range. Switching position 149 is a position corresponding to the position of ejector pin 22 at the time when monitor range 148 is set. Monitor range 148 and switching position 149 may be information stored in advance in memory 142, rather than information inputted by the operator.

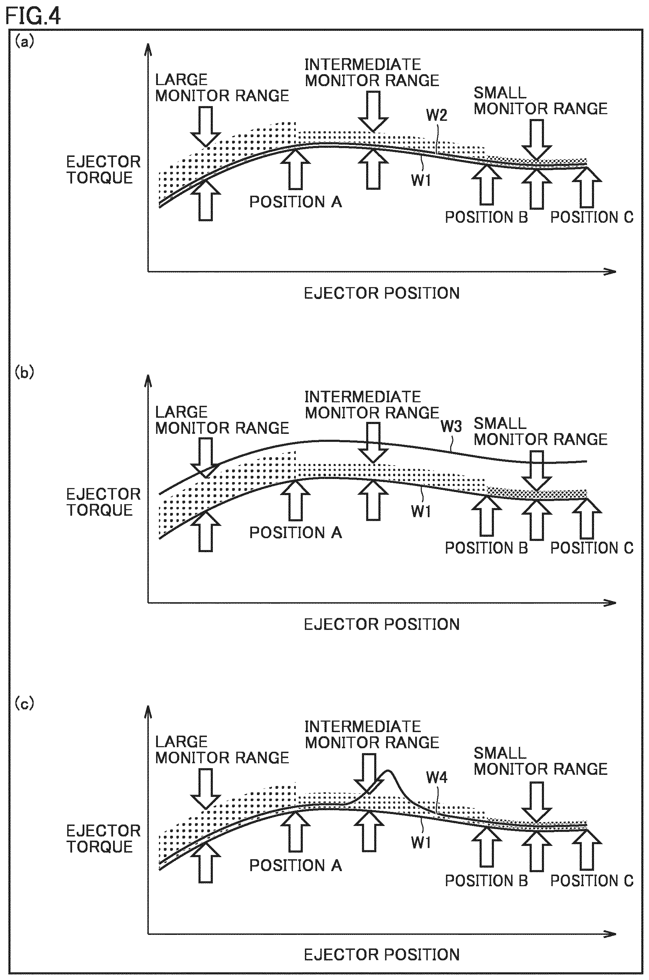

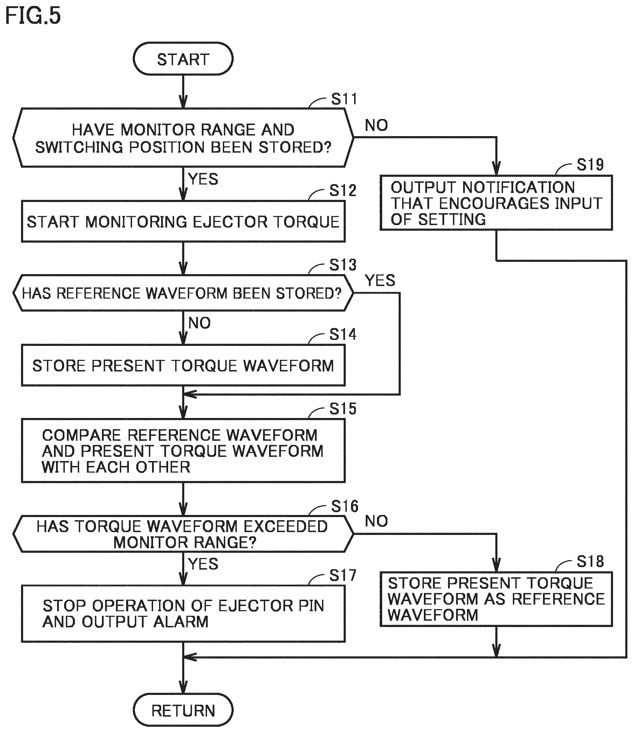

Comparator 144 determines whether or not ejector 20 is abnormal by comparing torque waveform 145 with reference waveform 146. A determination method will be described in detail with reference to Figs. 4 and 5. When controller 140 determines that ejector 20 is abnormal, it controls warning apparatus 180 to output an alarm. Controller 140 may have information on abnormality shown on operation panel 130.

### (Torque Waveform of Ejector)

Fig. 4 is a diagram showing relation between an ejector position and ejector torque in ejector 20 according to the first embodiment. The ejector position refers to a position of ejector pin 22 in the ejection step. Ejector torque refers to torque (actual value) outputted from servo motor 152 in the ejection step. The abscissa represents the ejector position and the ordinate represents ejector torque.

Fig. 4(a) is a diagram showing an example where a torque waveform W2 is within the monitor range with respect to a reference waveform W1. Fig. 4(b) is a diagram showing an example where a torque waveform W3 is out of the monitor range with respect to reference waveform W1. Fig. 4(c) is a diagram showing an example where a part of a torque waveform W4 is out of the monitor range with respect to reference waveform W1.

A position A, a position B, and a position C in Fig. 4 are the positions of ejection by ejector pin 22 set in advance by the operator. Position A is a position where an amount of ejection by ejector pin 22 in the positive direction along the X axis is small in hole 23 in mold 117. Position B is a position where the amount of ejection of ejector pin 22 is larger than that at position A. Position C is a position corresponding to a position where the amount of ejection by ejector pin 22 is larger than that at position B and is maximal.

The monitor range in Fig. 4 is an area that defines the threshold value for determination as to abnormality set in correspondence with the position of ejector pin 22. As shown in Fig. 4, the monitor range is set, for example, in three levels of large, intermediate, and small. The number of levels of the monitor range may be set to a number other than three, and only a single monitor range may be set. Controller 140 obtains torque waveform W2 of servo motor 152 while ejector pin 22 is operating, compares torque waveform W2 with reference waveform W1 obtained in advance, and determines that ejector 20 is abnormal when a difference between torque waveform W2 and reference waveform W1 exceeds the monitor range which represents the threshold value. When galling occurs, torque waveform W2 becomes larger in a direction of excess over the monitor range set with respect to reference waveform W1, which can therefore be paraphrased as controller 140 determining that there is abnormality when ejector torque exceeds the monitor range.

The difference refers to a value obtained by comparison between torque values of servo motor 152 corresponding to the same position of ejector pin 22. In the example in Fig. 4(a), as shown with torque waveform W2, ejector torque varies within the monitor range at all ejector positions. Controller 140 can thus determine that ejector 20 is normal in the example in Fig. 4(a).

In the example in Fig. 4(b), as shown with torque waveform W3, ejector torque varies as exceeding the monitor range. Controller 140 can thus determine that ejector 20 is abnormal in the example in Fig. 4(b). In the example in Fig. 4(c), as shown with torque waveform W4, in a range from position A to position B, ejector torque partially exceeds the monitor range. Controller 140 can thus determine that ejector 20 is abnormal in the example in Fig. 4(c).

Position A, position B, and position C in Fig. 4 are positions of switching of the monitor range which represents the threshold value. The switching position can be set at any position. In addition, the threshold value is variable in accordance with the position of ejector pin 22. Therefore, in injection molding machine 100, the switching position and the threshold value can be varied to suitable values depending on a material or the like of mold 117.

In injection molding machine 100 according to the first embodiment, the threshold value is set to be smaller when the amount of ejection by ejector pin 22 is large than when the amount of ejection by ejector pin 22 is small. At the time of start of ejection by ejector pin 22, variation in ejector torque necessary for ejection in mold 117 is likely. Therefore, a large monitor range is desirably set in order to suppress erroneous detection. In contrast, when the amount of ejection by ejector pin 22 is large, damage to mold 117 by ejector pin 22 is great if galling occurs due to deflection of a tip end of ejector pin 22. Therefore, the threshold value when the amount of ejection by ejector pin 22 is large is desirably smaller than the threshold value when the amount of ejection by ejector pin 22 is small. Injection molding machine 100 can thus appropriately vary the threshold value depending on the amount of ejection by ejector pin 22.

Fig. 5 is a flowchart showing control contents according to the first embodiment. A process in the flowchart in Fig. 5 is performed as being repeatedly called as a sub routine from a main routine in control by controller 140. Initially in step S (which will simply be denoted as "S" below) 11, controller 140 determines whether or not monitor range 148 and switching position 149 set by the operator have been stored in memory 142.

When controller 140 determines in S11 that monitor range 148 and switching position 149 have not been stored (NO in S11), it outputs a notification that encourages input of setting and has the process return from the sub routine to the main routine. The notification that encourages input of setting is, for example, representation to encourage the operator to input the monitor range and the switching position through operation panel 130. An alarm may be outputted as the notification that encourages input of setting, by means of warning apparatus 180. When controller 140 determines in S11 that monitor range 148 and switching position 149 have been stored (YES in S11), it starts monitoring ejector torque (S12).

Controller 140 then determines whether or not reference waveform 146 has been stored in memory 142 (S13). When controller 140 determines in S13 that reference waveform 146 has been stored (YES in S13), transition to processing in S15 is made. When controller 140 determines in S13 that reference waveform 146 has not been stored (NO in S13), it has presently obtained torque waveform 145 stored in the memory (S14).

Then in S15, controller 140 compares in comparator 144, reference waveform 146 and present torque waveform 145 with each other. Controller 140 then determines whether or not torque waveform 145 has exceeded the monitor range (S16). When controller 140 determines in S16 that torque waveform 145 has exceeded the monitor range as shown in Fig. 4(b) and (c) (YES in S16), it stops the operation of ejector pin 22, has warning apparatus 180 output an alarm (S17), and has the process return from the sub routine to the main routine.

When controller 140 determines in S16 that torque waveform 145 has not exceeded the monitor range as shown in Fig. 4(a) (NO in S16), it has the presently obtained torque waveform stored in the memory as reference waveform 146 (S18) and has the process return from the sub routine to the main routine.

Injection molding machine 100 according to the first embodiment obtains the torque waveform of servo motor 152 while ejector pin 22 is operating, compares the torque waveform with the reference waveform obtained in advance, and determines that ejector 20 is abnormal when the torque waveform exceeds the monitor range. Abnormality of ejector 20 due to unnecessary contact between ejector pin 22 and mold 117 can thus be detected. Therefore, damage to mold 117 due to application of extra force from ejector 20 to mold 117 under the influence by galling or the like can be prevented. In particular, since injection molding machine 100 can make determination as to abnormality each time ejector pin 22 operates, damage to mold 117 can promptly be prevented.

Injection molding machine 100 according to the first embodiment is summarized as shown below. Injection molding machine 100 makes a molded product with molds 117 and 118. Injection molding machine 100 includes ejector 20 that takes the molded product out of mold 117 by ejecting the same and controller 140. Ejector 20 includes servo motor 152, ejector pin 22 driven by servo motor 152 to eject the molded product, and torque sensor 171 that detects torque of servo motor 152. Controller 140 obtains torque waveform 145 of servo motor 152 while ejector pin 22 is operating, compares torque waveform 145 with reference waveform 146 obtained in advance, and determines that ejector 20 is abnormal when the difference between torque waveform 145 and reference waveform 146 exceeds the threshold value.

According to injection molding machine 100, torque waveform 145 of servo motor 152 while ejector pin 22 is operating is obtained, torque waveform 145 is compared with reference waveform 146 obtained in advance, and ejector 20 is determined as being abnormal when the difference between torque waveform 145 and reference waveform 146 exceeds the threshold value. Since abnormality of ejector 20 can thus be detected, damage to mold 117 due to application of extra force from ejector 20 to mold 117 can be prevented.

Ejector 20 repeats a cycle of ejection of the molded product. Reference waveform 146 is the torque waveform while ejector pin 22 is operating in a cycle preceding the presently performed cycle. According to this, the torque waveform while ejector pin 22 is operating in the cycle preceding the presently performed cycle can serve as the reference for determination and the torque waveform in the preceding cycle can effectively be utilized.

Reference waveform 146 is the fixed torque waveform set in advance. According to this, the fixed torque waveform can be adopted as reference waveform 146 and determination as to abnormality can be made without change of reference waveform 146.

The difference is a value resulting from comparison between torque values of servo motor 152 corresponding to the same position of ejector pin 22. According to this, since comparison between the torque values of servo motor 152 corresponding to the same position of ejection is made as the difference, the difference can be clarified.

The threshold value is variable in accordance with the position of ejector pin 22. According to this, an appropriate threshold value can be set in accordance with the position of ejector pin 22.

The threshold value is smaller when an amount of ejection by ejector pin 22 is large than when the amount of ejection by ejector pin 22 is small. According to this, the threshold value can appropriately be varied in accordance with the amount of ejection by ejector pin 22.

Warning apparatus 180 is further provided that outputs a warning when ejector 20 is determined as being abnormal. According to this, warning apparatus 180 can suitably give a notification of abnormality of ejector 20.

A determination method makes determination with controller 140, as to abnormality of ejector 20 that ejects a molded product from molds 117 and 118 in injection molding machine 100. Ejector 20 includes servo motor 152, ejector pin 22 driven by servo motor 152 to eject the molded product, and torque sensor 171 that detects torque of servo motor 152. The determination method includes obtaining torque waveform 145 of servo motor 152 while ejector pin 22 is operating, comparing torque waveform 145 with reference waveform 146 obtained in advance, and determining that ejector 20 is abnormal when the difference between torque waveform 145 and reference waveform 146 exceeds the threshold value.

The determination method includes obtaining torque waveform 145 of servo motor 152 while ejector pin 22 is operating, comparing torque waveform 145 with reference waveform 146 obtained in advance, and determining that ejector 20 is abnormal when the difference between torque waveform 145 and reference waveform 146 exceeds the threshold value. Since abnormality of ejector 20 can thus be detected, damage to mold 117 due to application of extra force from ejector 20 to mold 117 can be prevented.

### [Second Embodiment]

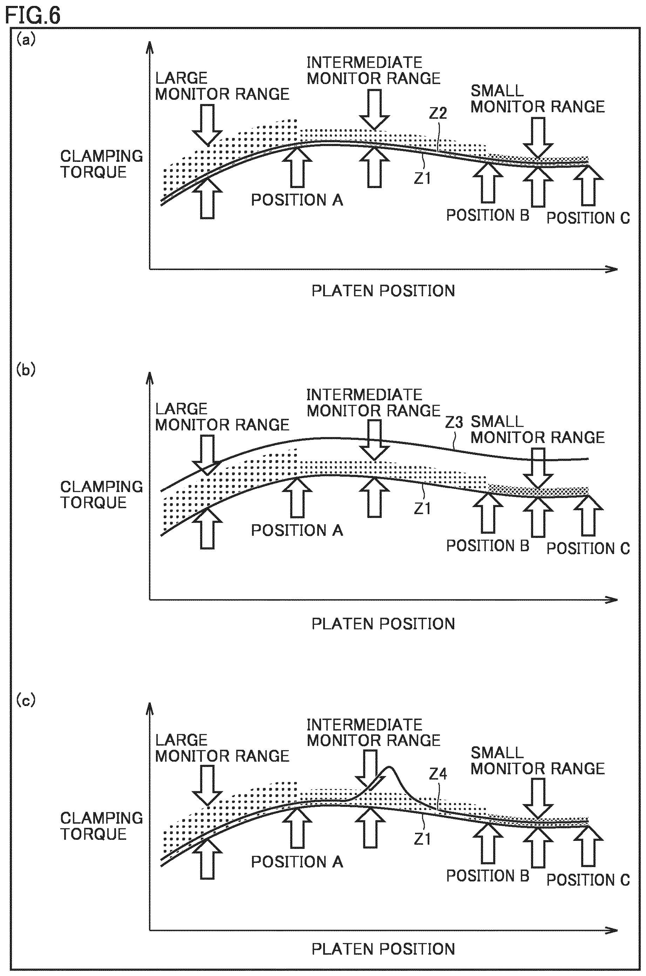

Detection of abnormality of ejector 20 is described in the first embodiment. In a second embodiment, detection of abnormality of clamping apparatus 110 instead of ejector 20, the clamping apparatus clamping molds 117 and 118 by clamping movable platen 114 against fixed platen 112, will be described. Fig. 6 is a diagram showing relation between a platen position and clamping torque in clamping apparatus 110 according to the second embodiment. The platen position represents a position of movable platen 114, and clamping torque represents torque (actual value) outputted from servo motor 151 when the clamping step is performed. The abscissa represents the platen position and the ordinate represents clamping torque.

Clamping apparatus 110 includes servo motor 151 that drives movable platen 114. Servo motor 151 is provided with a torque sensor (not shown) that detects torque of servo motor 151 and a position sensor (not shown) that detects an angle of rotation of servo motor 151. Detection signals from the torque sensor and the position sensor are outputted to controller 140.

Controller 140 obtains the torque waveform of servo motor 151 during clamping, compares the torque waveform with the reference waveform obtained in advance, and determines that clamping apparatus 110 is abnormal when a difference between the torque waveform and the reference waveform exceeds a threshold value.

Fig. 6(a) is a diagram showing an example where a torque waveform Z2 is within a monitor range with respect to a reference waveform Z1. Fig. 6(b) is a diagram showing an example where a torque waveform Z3 is out of the monitor range with respect to reference waveform Z1. Fig. 6(c) is a diagram showing an example where a part of a torque waveform Z4 is out of the monitor range with respect to reference waveform Z1.

A position A, a position B, and a position C in Fig. 6 are positions of movable platen 114 set in advance by the operator. The monitor range in Fig. 6 is an area that defines a threshold value for determination as to abnormality set in correspondence with the platen position of movable platen 114. As shown in Fig. 6, the monitor range is set, for example, in three levels of large, intermediate, and small. The number of levels of the monitor range may be set to a number other than three, and only a single monitor range may be set. Controller 140 obtains torque waveform Z2 of servo motor 151 during clamping, compares torque waveform Z2 with reference waveform Z1 obtained in advance, and determines that clamping apparatus 110 is abnormal when a difference between torque waveform Z2 and reference waveform Z1 exceeds the monitor range which represents the threshold value.

In the example in Fig. 6(a), as shown with torque waveform Z2, at all platen positions, clamping torque varies within the monitor range. Controller 140 can thus determine that clamping apparatus 110 is normal in the example in Fig. 6(a). In the example in Fig. 6(b), as shown with torque waveform Z3, clamping torque varies as exceeding the monitor range. Controller 140 can thus determine that clamping apparatus 110 is abnormal in the example in Fig. 6(b). In the example in Fig. 6(c), as shown with torque waveform Z4, in a range from position A to position B, clamping torque partially exceeds the monitor range. Controller 140 can thus determine that clamping apparatus 110 is abnormal in the example in Fig. 6(c).

Position A, position B, and position C in Fig. 6 are positions of switching of the monitor range which represents the threshold value. The switching position can be set at any position. The threshold value is variable in accordance with the position of movable platen 114.

Injection molding machine 100 according to the second embodiment obtains the torque waveform of servo motor 151 during clamping, compares the torque waveform with the reference waveform obtained in advance, and determines that clamping apparatus 110 is abnormal when the difference between the torque waveform and the reference waveform exceeds the threshold value. Since abnormality of clamping apparatus 110 can thus be detected, damage to molds 117 to 118 due to application of extra force from clamping apparatus 110 to molds 117 and 118 can be prevented.

Injection molding machine 100 according to the second embodiment is summarized as shown below. Injection molding machine 100 further includes clamping apparatus 110 that clamps molds 117 and 118 by clamping movable platen 114 against fixed platen 112. Clamping apparatus 110 includes servo motor 151 that drives movable platen 114 and the torque sensor that detects torque of servo motor 151. Controller 140 obtains the torque waveform of servo motor 151 during clamping, compares the torque waveform with the reference waveform obtained in advance, and determines that clamping apparatus 110 is abnormal when the difference between the torque waveform and the reference waveform exceeds the threshold value.

According to injection molding machine 100, the torque waveform of servo motor1 51 during clamping is obtained, the torque waveform is compared with the reference waveform obtained in advance, and clamping apparatus 110 is determined as being abnormal when the difference between the torque waveform and the reference waveform exceeds the threshold value. Since abnormality of clamping apparatus 110 can thus be detected, damage to molds 117 to 118 due to application of extra force from clamping apparatus 110 to molds 117 and 118 can be prevented.

Injection molding machine 100 makes the molded product with molds 117 and 118. Injection molding machine 100 includes clamping apparatus 110 that clamps molds 117 and 118 by clamping movable platen 114 against fixed platen 112 and controller 140. Clamping apparatus 110 includes servo motor 151 that drives movable platen 114 and the torque sensor that detects torque of servo motor 151. Controller 140 obtains the torque waveform of servo motor 151 during clamping, compares the torque waveform with the reference waveform obtained in advance, and determines that clamping apparatus 110 is abnormal when the difference between the torque waveform and the reference waveform exceeds the threshold value.

According to injection molding machine 100, the torque waveform of servo motor1 51 during clamping is obtained, the torque waveform is compared with the reference waveform obtained in advance, and clamping apparatus 110 is determined as being abnormal when the difference between the torque waveform and the reference waveform exceeds the threshold value. Since abnormality of clamping apparatus 110 can thus be detected, damage to molds 117 to 118 due to application of extra force from clamping apparatus 110 to molds 117 and 118 can be prevented.

Clamping apparatus 110 repeats a cycle of clamping of molds 117 and 118. The reference waveform is the torque waveform while clamping apparatus 110 is operating in a cycle preceding the presently performed cycle. According to this, the torque waveform while clamping apparatus 110 is operating in the cycle preceding the presently performed cycle can serve as the reference for determination and the torque waveform in the preceding cycle can effectively be utilized.

The reference waveform is the fixed torque waveform set in advance. According to this, the fixed torque waveform can be adopted as the reference waveform and determination as to abnormality can be made without change of the reference waveform.

The difference is a value resulting from comparison between torque values of servo motor 151 corresponding to the same position of movable platen 114. According to this, since the torque values of servo motor 151 are compared with each other, the difference can be clarified.

The threshold value is variable in accordance with the position of movable platen 114. According to this, an appropriate threshold value in accordance with the position of movable platen 114 can be set.

The threshold value is smaller when the amount of movement of movable platen 114 is large than when the amount of movement of movable platen 114 is small. According to this, the threshold value can appropriately be varied in accordance with the position of movable platen 114.

### [Modification]

Though an example where the difference between the reference waveform and the torque waveform has a positive value is shown, the difference may have a negative value. In this case, determination that damaging force is not applied to mold 117 may be made and warning sound does not have to be outputted.

An example in which torque expressed as torque waveforms of ejector 20 and clamping apparatus 110 is output torque (actual value) that has actually been outputted is shown. When a fixed value is set as the reference waveform, torque in the reference waveform may be torque to be outputted, which is given as a command value from controller 140.

Though embodiments of the present invention have been described, it should be understood that the embodiments disclosed herein are illustrative and non-restrictive in every respect. The scope of the present invention is defined by the terms of the claims and is intended to include any modifications within the scope and meaning equivalent to the terms of the claims.

## Claims

1. An injection molding machine (100) that makes a molded product with a mold (117, 118), the injection molding machine comprising:
an ejector (20) that takes the molded product out of the mold (117, 118) by ejecting the molded product; and
a controller (140), wherein
the ejector (20) includes
a first motor (152),
an ejector pin (22) driven by the first motor (152) to eject the molded product, and
a first detector (171) that detects torque of the first motor (152), and the controller (140) is configured to
obtain a first torque waveform (145) of the first motor (152) while the ejector pin (22) is operating,
compare the first torque waveform (145) with a first reference waveform (146) obtained in advance, and
determine that the ejector (20) is abnormal when a difference between the first torque waveform (145) and the first reference waveform (146) exceeds a threshold value.

2. The injection molding machine according to claim 1, wherein
the ejector (20) is configured to repeat a cycle of ejection of the molded product, and
the first reference waveform (146) is a torque waveform while the ejector pin (22) is operating in a cycle preceding a presently performed cycle.

3. The injection molding machine according to claim 1 or 2, wherein
the first reference waveform (146) is a fixed torque waveform set in advance.

4. The injection molding machine according to any one of claims 1 to 3, wherein
the difference is a value resulting from comparison between torque values of the first motor (152) corresponding to an identical position of the ejector pin (22).

5. The injection molding machine according to any one of claims 1 to 4, wherein
the threshold value is variable in accordance with a position of the ejector pin (22).

6. The injection molding machine according to claim 5, wherein
the threshold value is smaller when an amount of ejection by the ejector pin (22) is large than when the amount of ejection by the ejector pin (22) is small.

7. The injection molding machine according to any one of claims 1 to 6, further comprising a warning apparatus (180) that outputs a warning when the controller determines that the ejector (20) is abnormal.

8. The injection molding machine according to any one of claims 1 to 7, further comprising a clamping apparatus (110) that clamps the mold (117, 118) by clamping a movable platen (114) against a fixed platen (112), wherein
the clamping apparatus (110) includes
a second motor (151) that drives the movable platen (114), and
a second detector that detects torque of the second motor (151), and the controller (140) is configured to
obtain a second torque waveform of the second motor (151) during clamping,
compare the second torque waveform with a second reference waveform obtained in advance, and
determine that the clamping apparatus (110) is abnormal when a difference between the second torque waveform and the second reference waveform exceeds a threshold value.

9. The injection molding machine according to claim 8, wherein
the clamping apparatus (110) is configured to repeat a cycle of clamping of the mold (117, 118), and
the second reference waveform is a torque waveform while the clamping apparatus (110) is operating in a cycle preceding a presently performed cycle.

10. The injection molding machine according to claim 8 or 9, wherein
the second reference waveform is a fixed torque waveform set in advance.

11. The injection molding machine according to any one of claims 8 to 10, wherein
the difference is a value resulting from comparison between torque values of the second motor (151) corresponding to an identical position of the movable platen (114).

12. The injection molding machine according to any one of claims 8 to 11, wherein
the threshold value is variable in accordance with a position of the movable platen (114).

13. The injection molding machine according to claim 12, wherein
the threshold value is smaller when an amount of movement of the movable platen (114) is large than when the amount of movement of the movable platen (114) is small.

14. An injection molding machine (100) that makes a molded product with a mold (117, 118), the injection molding machine comprising:
a clamping apparatus (110) that clamps the mold (117, 118) by clamping a movable platen (114) against a fixed platen (112); and
a controller (140), wherein
the clamping apparatus (110) includes
a second motor (151) that drives the movable platen, and
a second detector that detects torque of the second motor (151), and the controller (140) is configured to
obtain a second torque waveform of the second motor (151) during clamping,
compare the second torque waveform with a second reference waveform obtained in advance, and
determine that the clamping apparatus (110) is abnormal when a difference between the second torque waveform and the second reference waveform exceeds a threshold value.

15. The injection molding machine according to claim 14, wherein
the clamping apparatus (110) is configured to repeat a cycle of clamping of the mold (117, 118), and
the second reference waveform is a torque waveform while the clamping apparatus (110) is operating in a cycle preceding a presently performed cycle.

16. The injection molding machine according to claim 14 or 15, wherein the second reference waveform is a fixed torque waveform set in advance.

17. The injection molding machine according to any one of claims 14 to 16, wherein
the difference is a value resulting from comparison between torque values of the second motor corresponding to an identical position of the movable platen (114).

18. The injection molding machine according to any one of claims 14 to 17, wherein
the threshold value is variable in accordance with a position of the movable platen (114).

19. The injection molding machine according to claim 18, wherein
the threshold value is smaller when an amount of movement of the movable platen (114) is large than when the amount of movement of the movable platen (114) is small.

20. A method of making determination as to abnormality of an ejector (20) with a controller (140), the ejector (20) ejecting a molded product from a mold (117, 118) in an injection molding machine (100), the ejector (20) including a first motor (152), an ejector pin (22) driven by the first motor (152) to eject the molded product, and a first detector (171) that detects torque of the first motor (152), the determination method comprising:
obtaining a first torque waveform (145) of the first motor (152) while the ejector pin (22) is operating;
comparing the first torque waveform (145) with a first reference waveform (146) obtained in advance; and
determining that the ejector (20) is abnormal when a difference between the first torque waveform (145) and the first reference waveform (146) exceeds a threshold value.
